# EUROPÄISCHE PATENTSCHRIFT

(11) **EP 2 393 760 B1**
(45) Veröffentlichungstag und Bekanntmachung des Hinweises auf die Patenterteilung: **07.01.2015**
(21) Anmeldenummer: 11708281.8
(22) Anmeldetag: 15.03.2011
(51) Int. Cl.: C04B 2/12

(54) **VERFAHREN ZUR HERSTELLUNG VON REAKTIVEM BRANNTKALK AUS KREIDE**
PROCESS FOR PRODUCING REACTIVE QUICKLIME FROM CHALK
PROCÉDÉ DE PRODUCTION DE CHAUX VIVE RÉACTIVE À PARTIR DE CRAIE

(30) Priorität: 22.03.2010 DE 102010016059
(43) Veröffentlichungstag der Anmeldung: 14.12.2011
(73) Patentinhaber: ThyssenKrupp Industrial Solutions AG, 45143 Essen (DE)
(72) Erfinder: Schuh, Uwe, 59071 Hamm (DE); Beyer, Christoph, 48147 Münster (DE)
(74) Vertreter: Tetzner, Michael
(86) Internationale Anmeldenummer: PCT/EP2011/053893
(87) Internationale Veröffentlichungsnummer: WO 2011/117116

(56) Entgegenhaltungen:
- DE-A1- 2 408 178
- DE-B3-102007 062 062
- FR-A1- 2 523 569
- GB-A- 781 984
- US-A- 3 280 228
- US-A- 3 887 326
- US-A- 4 025 293

## Beschreibung

Die Erfindung betrifft ein Verfahren zur Herstellung von reaktivem Branntkalk aus Kreide.

Kalk wird üblicherweise in Kalkschachtöfen aus stückigem Kalkstein gebrannt. In weiten Teilen Nord-Ost-Europas stehen oft keine hartkristallinen Kalksteine für die Produktion von Branntkalk zur Verfügung. Geeigneter Kalkstein muss daher über sehr lange Transportwege zu den Verbrauchern transportiert werden.

In der DE 10 2007 062 062 B3 wurde daher ein Verfahren zur Herstellung von hydraulischem Kalk beschrieben, bei dem Gesteinsmaterialien in Form von Waschrückständen aus Waschprozessen von Kalksteinen und anderen Gesteinen, jeweils mit Korngrößen von 99 Gew.-% unter 500µm, als Rohstoffe eingesetzt werden.

Eine andere Möglichkeit stellen Kreidevorkommen des europäischen Kreidegürtels dar, die von ihrer Zusammensetzung für die Herstellung von Branntkalk geeignet wären. Bedingt durch die hohe Feuchte und der Feinteiligkeit ist eine Nutzung dieser Kreiden zur Produktion von Branntkalk derzeit nur in energetisch unvorteilhaften Langdrehöfen möglich. Vorwärmer zur Energieeffizienzsteigerung der Drehöfen sind entweder mit sehr hohen Investitionskosten verbunden oder die hierfür erforderlichen Einrichtungen, wie Schwebegasvorwärmer, sind nicht vorhanden. Schachtvorwärmer und Schachtöfen stellen bedingt durch die geringe mechanische Festigkeit der Kreide keine sinnvolle Alternative dar.

Beim Brennen der Kreidestücke in Drehöfen kommt es zu einem relativ hohen Zerfall, sodass letztendlich Stücke größtenteils unter 10mm vorliegen. Diese Körnung kann in der Regel nur als Baukalk eingesetzt werden. Ein wesentlich größerer Bedarf besteht aber bei der Stahlherstellung. Hierfür sind jedoch Stückgrößen von wenigstens 10mm erforderlich. Langöfen haben zudem den Nachteil eines sehr hohen Staubverlustes, der in der Regel mit mehr als 20% der Produktion anzusetzen ist.

In der DE 24 08 178 A wird ein Verfahren zur Erzeugung von gebranntem Kalk aus korn- oder pulverförmigem Material beschrieben, wobei von einem aufbereiteten Ausgangsmaterial mit einer Korngröße von 0 - 10 mm und einem Feuchtigkeitsgehalt von 2 - 25 Gewichtsprozent durch äußere Druckwirkung Körperchen geformt und diese in einem Brennaggregat gebrannt werden.

Die US 4 025 293 A offenbart ein Verfahren zur Wäremebehandlung von stückigem Gut, wie Kalk, Dolomit und Magnesit in einem Schachtofen. Ein weiteres Verfahren zur Herstellung von hydraulischem Kalk ist ferner aus der DE 10 2007 062 062 B3 bekannt, wobei aus feinteiligem Rohstoffgut zunächst Presskörper geformt werden, die anschließend in einem Kalkschachtofen wärmebehandelt werden.

Der Erfindung liegt nun die Aufgabe zugrunde, ein energetisch günstiges Verfahren zur Herstellung von Branntkalk aus Kreide anzugeben, mit dem Stückgrößen von wenigstens 10 mm problemlos möglich sind.

Erfindungsgemäß wird diese Aufgabe durch die Merkmale des Anspruches 1 gelöst.

Beim erfindungsgemäßen Verfahren zur Herstellung von reaktivem Branntkalk durch Wärmebehandlung von Kreide, wird die Kreide in kompakte Formkörper mit einer Grünfestigkeit > 100N geformt, sodass die Formkörper eine Größe von wenigstens 10mm und eine stift-, oval- oder kugelförmige oder runde Form aufweisen. Die Formkörper werden in eine konstant durchströmbare vertikale Schüttung gebracht und anschließend in der vertikalen Schüttung getrocknet und/oder vorgewärmt und/oder vorcalciniert und gebrannt.

Die abgebauten Kreidestücke haben üblicherweise keine ausreichende Festigkeit, um in einer vertikalen Schüttung, beispielsweise in einem Schachtofen, gebrannt zu werden. Erfindungsgemäß werden daher aus der abgebauten Kreide kompakte Formkörper mit einer Grünfestigkeit von > 100N geformt. Dadurch erhält die Kreide auch für eine vertikale Schüttung eine ausreichende Festigkeit, um dem Ofengang standzuhalten. Die Formkörper haben darüber hinaus den Vorteil, dass alle Formkörper eine definierte Größe und Form aufweisen, wodurch sich eine konstant durchströmbare Schüttung aufbauen lässt und sich über die gesamte Produktion sehr gleichmäßige Branntkalkqualitäten gewährleisten lassen.

Für die ausreichende Stabilität der Formkörper ist es außerdem erforderlich, dass diese vor dem Brennen wenigstens teilweise getrocknet und/oder vorgewärmt und/oder vorcalciniert werden, da sich durch diese Wärmebehandlung die Festigkeit weiter erhöht.

Mit diesem Verfahren lassen sich Branntkalkstücke aus Kreide herstellen, die ≥10mm sind und daher für den Einsatz in der Stahlherstellung geeignet sind.

Weitere Ausgestaltungen der Erfindung sind Gegenstand der Unteransprüche.

Die Wärmebehandlung, also das Trocknen und/oder Vorwärmen und/oder Vorcalcinieren und/oder Brennen, der Formkörper erfolgt vorzugsweise in einem Schachtofen bzw. in einem vertikalen Schachtvorwärmer.

Die Formung kann beispielsweise durch Pelletieren erfolgen. Vorzugsweise wird jedoch die Brikettierung angewandt. Die Briketts haben gegenüber Pellets in der Regel eine höhere Festigkeit. Auch haben die Briketts die Eigenschaft, dass sie aufgrund der vielen kleinen inneren Risse leichter entgasen und dadurch beim Brennen weniger zerbrechen.

Gemäß einer weiteren Ausgestaltung der Erfindung erfolgt die Trocknung und/oder Vorwärmung und/oder Vorcalcinierung mit einem Temperaturanstieg von 1 bis 2°C/min. Bei den der Erfindung zugrundeliegenden Versuchen hat sich herausgestellt, dass ein Temperaturanstieg in diesem Bereich die Größenfestigkeiten der Formkörper vor dem Brennen ermöglicht. Weiterhin kann es zweckmäßig sein, wenn man der Kreide vor oder beim Formen der Formkörper formerhaltende Additive zumischt.

Ein energetisch besonders effizientes Herstellungsverfahren ergibt sich dann, wenn die beim Brennen der Formkörper entstehenden Abgase ganz oder teilweise zum Trocknen und/oder Vorwärmen und/oder Vorcalcinieren genutzt werden. Außerdem ist es zweckmäßig, die Wärmebehandlung der Formkörper im Gegenstromverfahren zu betrieben, wie das beispielsweise in einem Schachtofen der Fall ist, wo die Abgase entgegen der Bewegungsrichtung der Formkörper strömen. Mit dem Gegenstromverfahren können gegenüber dem Gleich- oder Kreuzstromverfahren wesentlich höhere Temperaturen erreicht werden.

Der nach dem obigen Verfahren hergestellte Branntkalk weist vorzugsweise einen Rest-CO₂-Gehalt von weniger als 5% auf.

Die Durchführung des obigen Verfahrens erfolgt in einer Anlage mit einer Form- und Grünfestigkeitseinrichtung und einem vertikalen Reaktionsraum, insbesondere einem Schachtofen.

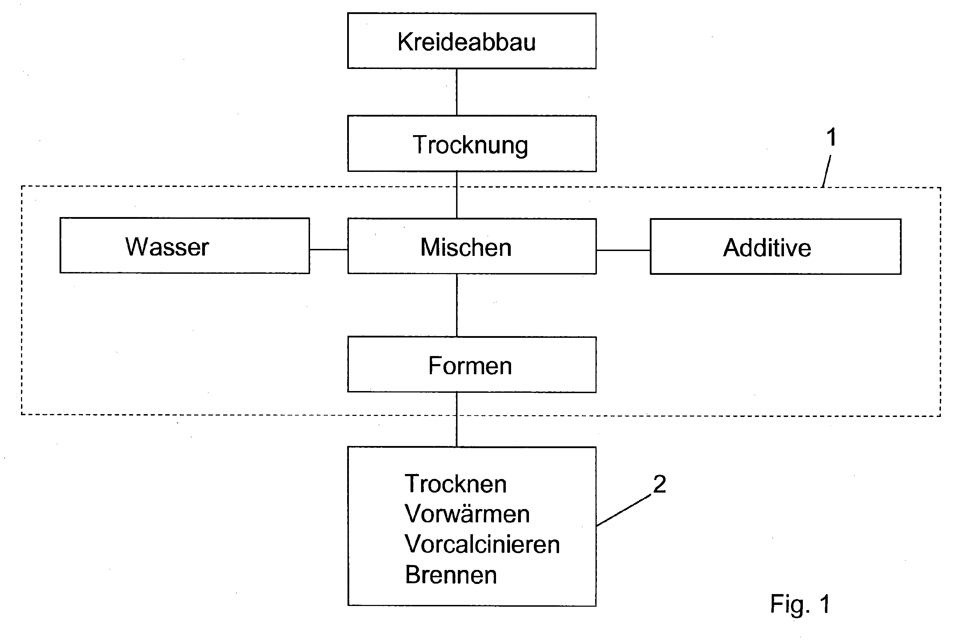

Weitere Vorteile und Ausgestaltungen der Erfindung werden im Folgenden anhand der Beschreibung und der Zeichnung näher erläutert.

Die Zeichnung zeigt ein Blockdiagramm des Verfahrensablaufs der Herstellung von reaktivem Branntkalk aus Kreide.

Nach dem Kreideabbau erfolgt je nach Feuchtigkeitsgehalt der Kreide eine Trocknung des Rohmaterials. Anschließend wird die Kreide mit Wasser und ggf. zusätzlichen Additiven vermischt und die Mischung wird zu kompakten Formkörpern mit einer Grünfestigkeit von > 100N geformt. Die Formung erfolgt dabei zweckmäßigerweise durch Brikettierung.

Beim Brikettieren wird die Kreide in einen Formkörper mit einer Größe von wenigstens 10mm gepresst. Die Formkörper können dabei wahlweise stift-, oval-, kugel- oder linsenförmig ausgebildet sein. Die Form wird so gewählt, dass sich eine vertikale Schüttung aufbauen lässt, die sich möglichst gleichmäßig vom Behandlungsgas durchströmen lässt.

Die Wärmebehandlung der Formkörper erfolgt vorzugsweise in einem vertikalen Schachtofen, bei dem die Formkörper oben aufgegeben und nach der Wärmebehandlung unten abgezogen werden. Das Behandlungsgas wird im Gegenstrom von unten nach oben geführt, wobei es beispielsweise als Kühlluft unten zugeführt und als Abgas oben ausgeschleust wird. Die Formkörper durchlaufen oder durchwandern im Schachtofen nacheinander eine Trocknungs- bzw. Vorwärmzone, eine Vorcalcinierzone, eine Brennzone und schließlich eine Kühlzone. Im Bereich der Trocknung-, Vorwärm- und Vorcalcinationszone beträgt der Temperaturanstieg der Vorwärmkörper 1 bis 2°C pro Minute. In der Brennzone werden die Formkörper mit Temperaturen von 900°C bis 1650°C, vorzugsweise mit Temperaturen von 1200°C bis 1400°C, gebrannt.

Je nach weiterer Verwendung können die Formkörper nach dem Schachtofen gesiebt und ggf. zerkleinert werden.

Der Schachtofen wird so betrieben, dass sich ein Branntkalk ergibt, der einen Rest-CO₂-Gehalt von weniger als 5% aufweist.

Die zur Durchführung des obigen Verfahrens vorgesehene Anlage weist eine Form- und Grünfestigkeitseinrichtung 1 auf, die in der Zeichnung gestrichelt angedeutet ist, und einen vertikalen Reaktionsraum 2, der im dargestellten Ausführungsbeispiel durch einen Schachtofen gebildet wird.

Das obige Verfahren ermöglicht die Nutzung von chemisch hochreinem, feinteiligem Calciumcarbonat (Kreide) zur Erzeugung von Branntkalk. Die Verwendung von Kreide verringert die CO₂-Emissionen beim Gesamtprozess der Branntkalkherstellung, da lange Transportwege entfallen können und eine vertikale Schüttung eine höhere Brenneffizienz ermöglicht.

Weiterhin besteht die Möglichkeit, Branntkalk mit Stückgrößen von wenigstens 10mm und einer hohen Reaktivität herzustellen, sodass diese als Stahlwerkskalk genutzt werden kann.

Durch die Verwendung von Formkörpern gleicher Größe wird weiterhin ein gleichmäßiger Ofengang gewährleistet. Daraus resultiert ein gleichmäßiger Brenngrad (Rest-CO₂, Reaktivität, Freikalk) und ein geringerer Energieverbrauch (geringerer Abgasverluste durch geringere Randgängigkeit). Durch die einheitliche Größe wird die Verweilzeit nicht mehr durch das Maximalkorn bestimmt, sodass bei gleicher Ofengröße eine Steigerung der Kapazität möglich wird.

Nachdem der Calciumcarbonatanteil bei den Kreidevorkommen in der Regel höher als bei vielen Kalksteinen ist, ergibt sich ein hoher Nutzwert des Branntkalkes. Weiterhin ist ein höherer Freikalkgehalt pro Kilogramm Brenngut gegeben, sodass der Einsatz von Kreide für die Herstellung von synthetischem Calciumcarbonat (PCC) ermöglicht wird. Gegenüber einem Einsatz von Drehrohröfen ohne Vorwärmer ergeben sich beim erfindungsgemäßen Verfahren wesentlich geringere Staubverluste. Dadurch erhöht sich insgesamt die Wirtschaftlichkeit der Herstellung (ggf. geringere Deponiekosten, mehr Produkt pro eingesetztem Rohmaterial). Außerdem können die beim erfindungsgemäßen Verfahren entstehenden Stäube über die Aufbereitung des Rohmaterials wieder verwendet werden.

## Patentansprüche

1. Verfahren zur Herstellung von reaktivem Branntkalk durch Wärmebehandlung von Kreide, wobei,
• die Kreide in kompakte Formkörper mit einer Grünfestigkeit > 100N geformt wird, sodass die Formkörper eine Größe von wenigstens 10mm und eine stift-, oval- oder kugelförmige oder runde Form aufwei sen,
• die Formkörper in eine konstant durchströmbare vertikale Schüttung gebracht werden und
• anschließend die Formkörper in der vertikalen Schüttung getrocknet und/oder vorgewärmt und/oder vorcalciniert und gebrannt werden.

2. Verfahren nach Anspruch 1, **dadurch gekennzeichnet, dass** das Trocknen und/oder Vorwärmen und/oder Vorcalcinieren und/oder Brennen der Formkörper in einem Schachtofen und/oder in einem vertikalen Schachtvorwärmer erfolgt.

3. Verfahren nach Anspruch 1, **dadurch gekennzeichnet, dass** das Trocknen und/oder Vorwärmen und/oder Vorcalcinieren und Brennen der Formkörper in ein und derselben vertikalen Schüttung erfolgt.

4. Verfahren nach Anspruch 1, **dadurch gekennzeichnet, dass** die Trocknung und/oder die Vorwärmung und/oder die Vorcalcinierung mit einem Temperaturanstieg im Bereich von 1 - 2°C/min erfolgt.

5. Verfahren nach Anspruch 1, **dadurch gekennzeichnet, dass** die Formkörper bei Temperaturen von 900°C bis 1650°C gebrannt werden.

6. Verfahren nach Anspruch 1, **dadurch gekennzeichnet, dass** die beim Brennen der Formkörper entstehenden Abgase ganz oder teilweise zum Trocknen und/oder Vorwärmen und/oder Vorcalcinieren genutzt werden.

7. Verfahren nach Anspruch 1, **dadurch gekennzeichnet, dass** die Wärmebehandlung der Formkörper im Gegenstromverfahren betrieben wird.

8. Verfahren nach Anspruch 1, **dadurch gekennzeichnet, dass** der Kreide vor oder beim Formen der Formkörper formerhaltende Additive zugemischt werden.

9. Branntkalk aus stückiger Kreide, hergestellt nach dem Verfahren gemäß einem oder mehreren der vorhergehenden Ansprüche.

10. Branntkalk nach Anspruch 1, **dadurch gekennzeichnet, dass** die gebrannten Formkörper einen Rest-CO₂-Gehalt von weniger als 5% aufweisen.

## Claims

1. Method for producing reactive quicklime by thermally processing chalk, wherein
• the chalk is formed into compact shaped members having a green strength of > 100 N so that the shaped members have a size of at least 10 mm and a pin-like, oval or spherical or round shape,
• the shaped members are brought into a vertical stack which can be constantly flowed through,
• the shaped members are subsequently dried in the vertical stack and/or pre-heated and/or pre-calcined and burnt.

2. Method according to claim 1, **characterised in that** the drying and/or preheating and/or pre-calcination and/or burning of the shaped members is carried out in a shaft furnace and/or in a vertical shaft pre-heater.

3. Method according to claim 1, **characterised in that** the drying and/or preheating and/or pre-calcination and burning of the shaped members is carried out in one and the same vertical stack.

4. Method according to claim 1, **characterised in that** the drying and/or preheating and/or pre-calcination is carried out with a temperature increase in the range from 1 to 2°C/min.

5. Method according to claim 1, **characterised in that** the shaped members are burnt at temperatures of from 900°C to 1650°C.

6. Method according to claim 1, **characterised in that** the waste gases which are produced when the shaped members are burnt are used completely or partially for drying and/or preheating and/or pre-calcination.

7. Method according to claim 1, **characterised in that** the thermal processing of the shaped members is carried out using a counter-flow method.

8. Method according to claim 1, **characterised in that** shape-maintaining additives are added to the chalk before or during the shaping of the shaped members.

9. Quicklime comprising pelletised chalk, produced in accordance with the method according to one or more of the preceding claims.

10. Quicklime according to claim 1, **characterised in that** the burnt shaped members have a residual CO₂ content of less than 5%.

## Revendications

1. Procédé de fabrication de chaux vive réactive par traitement à chaud de craie, sachant que
- la craie est faonnée en corps compacts avec une résistance à vert > 100 N, de telle manière que les corps façonnés aient une grosseur d'au moins 10 mm et présentent une forme allongée, ovale ou ronde,
- les corps façonnés sont empilés en un tas vertical à perméabilité constante,
- les corps façonnés sont ensuite séchés et / ou préchauffés et / ou précalcinés et calcinés en empilement vertical.

2. Procédé selon la revendication 1, **caractérisé en ce que** le séchage et / ou le préchauffage et / ou la précalcination et / ou la calcination des corps façonnés sont effectués dans un four à cuve et / ou dans un puits de préchauffage vertical.

3. Procédé selon la revendication 1, **caractérisé en ce que** le séchage et / ou le préchauffage et / ou la précalcination et la calcination des corps façonnés sont effectués en un seul et même empilement vertical.

4. Procédé selon la revendication 1, **caractérisé en ce que** le séchage et / ou le préchauffage et / ou la précalcination et / ou la calcination des corps façonnés sont effectués avec une augmentation de température située dans une plage de 1 à 2 °C / min.

5. Procédé selon la revendication 1, **caractérisé en ce que** les corps façonnés sont calcinés à des températures de 900 °C à 1650 °C.

6. Procédé selon la revendication 1, **caractérisé en ce que** les gaz d'échappement générés lors de la calcination des corps façonnés sont utilisés entièrement ou partiellement pour le séchage et / ou le préchauffage et / ou la précalcination.

7. Procédé selon la revendication 1, **caractérisé en ce que** le traitement à chaud des corps façonnés est effectué selon le procédé à contrecourant.

8. Procédé selon la revendication 1, **caractérisé en ce que** des additifs de maintien de forme sont mélangés à la craie avant ou lors du formage des corps façonnés.

9. Chaux vive fabriquée à partir de craie en morceaux conformément au procédé selon l'une ou plusieurs des revendications précédentes.

10. Chaux vive selon la revendication 1, **caractérisée en ce que** les corps façonnés calcinés présentent une teneur résiduelle en CO₂ inférieure à 5 %.
